# FASCICULE DE BREVET EUROPEEN

(11) **EP 2 211 286 B1**
(45) Date de publication et mention de la délivrance du brevet: **09.05.2018**
(21) Numéro de dépôt: 09181050.7
(22) Date de dépôt: 31.12.2009
(51) Int. Cl.: G06F 21/83

(54) **Procédé de sécurisation d'interface entre un utilisateur et une application, système, terminal et produit programme d'ordinateur correspondants.**
Verfahren zur Schnittstellensicherung zwischen einem Benutzer und einer Anwendung, entsprechendes System, entsprechendes Endgerät und entsprechendes Computerprogrammprodukt
Method for securing an interface between a user and an application, corresponding system, terminal and computer program

(30) Priorité: 19.01.2009 FR 0950286
(43) Date de publication de la demande: 28.07.2010
(73) Titulaire: Ingenico Group, 75015 Paris (FR)
(72) Inventeur: Grandemenge, Jérôme, 92700, Colombes (FR)
(74) Mandataire: Vidon Brevets & Stratégie

(56) Documents cités:
- US-A1- 2005 182 924
- US-A1- 2007 244 761
- US-A1- 2008 155 691
- US-B1- 7 240 360

## Description

### 1. Domaine de l'invention

Le domaine de l'invention est celui de la sécurisation d'une interface entre des utilisateurs et des applications informatiques pour des dispositifs électroniques, et plus particulièrement des dispositifs électroniques sécurisés.

Plus précisément, l'invention concerne le contrôle ou la surveillance de la mise en oeuvre d'applications non sécurisées, par exemple non certifiées, sur des terminaux assurant également la mise en oeuvre d'applications certifiées.

L'invention concerne ainsi notamment les terminaux de paiement.

### 2. Art antérieur

Du fait de la nature des opérations auxquelles ils sont destinés, de tels terminaux permettant des paiements électroniques, et plus généralement des opérations nécessitant une sécurisation, et supposant par exemple la communication d'un code secret, constituent des cibles préférentielles d'agressions informatiques.

En particulier, une application informatique malveillante s'exécutant sur un terminal de paiement pourrait nuire à la disponibilité ou au fonctionnement de ce terminal, ou utiliser les informations fournies par un utilisateur pour effectuer des opérations frauduleuses.

Des morceaux de code peuvent par exemple être activés par l'utilisateur lui-même, à son insu, lors de son interaction avec le terminal. Une application malveillante peut notamment obtenir de l'utilisateur des données sensibles, comme des données bancaires par exemple.

Des techniques d'hameçonnage (dites aussi « phishing » en anglais) sont également utilisées afin de pousser l'utilisateur à fournir des données confidentielles par usurpation de l'identité d'une société respectable. Par exemple, l'utilisateur peut être dirigé à son insu vers un site Internet malveillant se faisant passer pour le site bancaire de l'utilisateur ou pour un site d'achats en ligne.

Selon une autre approche, l'application malveillante peut jouer un film, requérant une information confidentielle en simulant l'interface habituelle d'une application sécurisée. L'application se trouvant « derrière » le film peut alors récupérer l'information confidentielle, et la transmettre à un fraudeur.

Conscients des enjeux en présence, les acteurs du domaine ont cherché à prémunir les terminaux de ce type d'attaques.

L'une des solutions retenues consiste à, d'une part, définir des exigences en matière de sécurité des terminaux de paiement et des applications destinées à ces terminaux et, d'autre part, certifier les terminaux et les applications respectant ces exigences.

On peut en particulier citer le standard « PA DSS » (Payment Application Data Security Standard » en anglais, pour « Standard de Sécurisation des Données des Applications de Paiement »), défini par le groupement d'intérêt d'organismes bancaires PCI, les exigences de sécurité requises par l'EPC (Europan Payment Council) ou par le Groupement des Cartes Bancaires « CB ».

L'organisme EMVCo (Europay Mastercard Visa Corporation) délivre également des certifications EMV à des applications ou des terminaux de paiement, par le biais de laboratoires accrédités.

La certification d'une application peut par exemple se traduire par l'insertion d'un marqueur dans le code de l'application ou dans un de ses fichiers de configuration.

Le terminal vérifie ensuite la présence de ce marqueur au démarrage de l'application.

La certification d'une application est ainsi devenue un des critères exigés par les organismes bancaires pour l'intégrer dans un système de paiement.

Un inconvénient de ces techniques de l'art antérieur réside dans l'obligation, pour les industriels fournisseurs d'applications informatiques destinées à des terminaux de paiement, de faire certifier chaque version de leur application par un auditeur certifié par un groupement de standardisation.

Ainsi, un éditeur d'applications est amené à faire certifier une application selon différents standards si cette application est destinée à être utilisée dans plusieurs systèmes de paiement.

Un autre inconvénient réside dans le fait que cette opération de certification peut se révéler coûteuse, en temps et en ressources, dans le cas d'applications évoluant fréquemment.

L'art antérieur a également comme inconvénient d'imposer une certification à toutes les applications mises en oeuvre sur un terminal, alors que celle-ci n'est impérative que pour les applications nécessitant effectivement une sécurisation. Ainsi, sur un terminal de paiement, une application de paiement doit être certifiée. En revanche, ceci n'est pas nécessaire pour une application de jeu, ou une application diffusant des informations ou des publicités. Le document US2005182924 bloque la ou les actions d'un composant détecté comme suspect.

### 3. Objectifs de l'invention

L'invention a notamment pour objectif de pallier ces inconvénients de l'art antérieur. L'invention est définie par les revendications ci-après présentes. Plus précisément, un objectif de l'invention, selon au moins un mode de réalisation, est de limiter, pour un éditeur d'applications, les contraintes de la certification de ses applications, notamment lorsqu'il s'agit d'applications pour lesquelles l'exigence de sécurité pour l'application elle-même est faible ou nulle.

Un autre objectif de l'invention est, selon au moins un mode de réalisation, d'offrir une solution peu coûteuse en termes de certification pour les éditeurs d'applications et donc adaptée à la certification d'applications évoluant fréquemment ou à la certification d'applications destinées à plusieurs types de terminaux et de systèmes de paiement.

Encore un autre objectif de l'invention est, selon au moins un mode de réalisation, de proposer une solution facile à implémenter par les éditeurs d'applications.

Un objectif particulier de l'invention est, selon au moins un mode de réalisation, de proposer une solution évolutive aux fabricants de système de paiement.

L'invention a également pour objectif, selon au moins un mode de réalisation, de fournir une technique permettant la co-habitation, sur un même terminal, d'applications certifiées et d'applications non certifiées, sans nuire à la sécurité des applications certifiées.

Encore un autre objectif de l'invention est, selon au moins un mode de réalisation, de réduire les risques, pour l'utilisateur, de transmettre involontairement des informations confidentielles à une application non certifiée.

### 4. Exposé de l'invention

Dans la suite du document, on appelle « composant de contrôle » un composant d'interface d'une application susceptible de permettre à celle-ci de réaliser des opérations d'entrée / sortie, lesdites opérations pouvant être réalisées par le biais des moyens matériels divers comme par exemple une souris, un clavier, un crayon optique, un écran ou un haut-parleur. Le terme « composant de contrôle d'entrée » ou « composant d'entrée » s'applique plus particulièrement aux composants de contrôle permettant des opérations d'entrée (claviers et autres moyens de saisie d'informations notamment) et les termes « composant de contrôle de sortie » ou « composant de contrôle de sortie » aux composants de contrôle permettant des opérations de sortie (écrans, haut-parleurs,...).

Ces composants de contrôle sont dotés d'un certain nombre de propriétés comme, par exemple un ensemble d'actions potentielles d'un utilisateur, ou dans le cas de composant de contrôle associés à une interface graphique, une position sur l'écran, une taille, une couleur, l'association à une image et/ou un texte et à ses paramètres.

Lors de son exécution, l'application génère des vues successives qui constituent son interface avec l'utilisateur.

L'invention propose une solution nouvelle qui ne présente pas toutes les limitations de l'art antérieur sous la forme d'un procédé de sécurisation d'interface entre un utilisateur et une application non certifiée s'exécutant sur un dispositif électronique et délivrant au moins une vue à rendre sur un écran, une vue comprenant ou étant associée à au moins un composant de contrôle d'interface,
mettant en oeuvre, pendant l'exécution de ladite application, les étapes suivantes :
- analyse de composants de contrôle d'interface de ladite vue, de façon à détecter au moins un composant de contrôle d'interface susceptible de poser un problème de sécurité en incitant ledit utilisateur à fournir une information sensible, dit composant suspect ;
- si au moins un composant suspect est détecté, restriction ou invalidation des fonctionnalités d'au moins un composant de contrôle d'entrée dudit dispositif électronique, distinct dudit au moins un composant suspect et susceptible de permettre la fourniture de ladite information par ledit utilisateur à ladite application non certifiée ;
- génération du rendu de ladite vue et restitution de ladite vue.

Ainsi, l'invention permet d'autoriser la mise en oeuvre d'applications non certifiées, sur un terminal sécurisé. Pour cela, l'invention prévoit donc un contrôle dynamique de chaque application non certifiée, et le cas échéant la mise en oeuvre d'une action adaptée, telle que la limitation ou l'interdiction de l'usage d'un clavier ou de tout autre moyen d'entrée d'information pouvant être confidentielle.

Dans certains modes particuliers de mise en oeuvre de l'invention, ladite étape d'analyse tient compte d'un ensemble de règles de restriction d'utilisation prédéterminées d'au moins un desdits composants de contrôle d'interface et/ou d'au moins une combinaison d'au moins deux desdits composants de contrôle d'interface.

Dans un mode particulier de réalisation de l'invention, ladite étape d'analyse peut considérer comme un composant suspect tout clavier virtuel, ou un clavier virtuel situé dans une zone particulière de l'écran.

Selon certains modes préférentiels de réalisation de l'invention, ladite étape de restriction ou d'invalidation adapte ladite restriction ou invalidation en fonction de la ou desdites règles non respectées. Par exemple, dans le cas particulier où un clavier virtuel affiché dans une zone particulière de l'écran est considéré comme un composant suspect, l'étape de restriction peut notamment restreindre les possibilités de positionnement du pointeur d'une souris, de façon à le maintenir hors de cette zone d'écran.

Selon différents modes de réalisation de l'invention, l'étape de restriction ou d'invalidation peut porter sur au moins un élément appartenant au groupe comprenant :
- l'interdiction d'un affichage,
- la limitation d'une zone de capture,
- la limitation de l'utilisation d'au moins un moyen de contrôle d'entrée.

Dans un mode préférentiel de réalisation de l'invention, ladite étape de restriction ou d'invalidation peut limiter les actions possibles de l'utilisateur sur certains composants de contrôle d'entrée, et notamment sur des composants autres que le composant suspect détecté.

Ainsi, dans certains modes particuliers de réalisation de l'invention, ladite étape de restriction ou d'invalidation comprend une sous-étape d'interdiction de l'introduction d'information par l'intermédiaire d'un clavier réel ou virtuel.

Selon des modes de réalisation de l'invention, il peut s'agir d'un clavier dudit dispositif électronique ou d'un clavier appartenant à un autre appareil, par exemple un équipement périphérique dudit dispositif. Ainsi, dans le cas où le dispositif électronique est un terminal de paiement, il peut s'agir par exemple du clavier d'un « pin-pad » (équipement périphérique utilisé pour la saisie du code secret de l'utilisateur afin de le crypter).

Ladite étape peut ainsi aboutir à l'invalidation systématique des entrées d'un clavier réel ou virtuel.

Dans d'autres modes de réalisation de l'invention, ladite étape de restriction ou d'invalidation peut par exemple rendre inactif tout caractère alphanumérique d'un clavier réel ou virtuel et n'autoriser que des flèches de déplacement.

Dans d'autres modes de réalisation de l'invention, ladite étape de restriction ou d'invalidation comprend une sous-étape d'interdiction de la saisie d'information dans au moins une zone d'un écran de visualisation, ladite zone étant identifiée en fonction d'une zone d'affichage associée à au moins un composant suspect.

Ainsi, dans un mode particulier de réalisation de l'invention, ladite étape de restriction ou d'invalidation peut par exemple interdire certaines positions conjointes d'une zone de capture tactile et d'une image non certifiée, assimilée lors de l'étape d'analyse à un composant suspect, de façon à constituer un périmètre de sécurité autour de ladite image.

Enfin, d'autres modes de mise en oeuvre du procédé selon l'invention peuvent prévoir que ladite étape de restriction ou d'invalidation comprend une sous-étape de modification dynamique du rendu d'au moins un desdits composants de contrôle d'interface de ladite vue.

Dans certains modes de réalisation de l'invention, lesdites règles de restriction peuvent par exemple comprendre au moins une règle d'interdiction d'au moins une combinaison, jugée risquée, de composants de contrôle sur une même vue. Dans ce cas, l'étape de restriction ou d'invalidation peut aboutir à refuser l'affichage d'au moins l'un de ces composants de contrôle sur ladite vue, et le cas échéant afficher à la place ou en complément un message d'alerte.

Par exemple, lesdites règles de restriction ou d'invalidation peuvent interdire l'affichage conjoint d'un composant de contrôle d'entrée de type clavier virtuel et d'un composant de contrôle de sortie de type image non certifiée ; et ladite étape de restriction ou d'invalidation peut aboutir à refuser l'affichage dudit composant de contrôle d'entrée de type clavier virtuel.

Dans encore d'autres modes de mise en oeuvre de l'invention, lesdites règles de restriction peuvent proscrire au moins une combinaison de certaines propriétés desdits composants de contrôle.

Dans un mode particulier de réalisation de l'invention, adapté à un terminal de paiement, ladite étape de restriction ou d'invalidation peut par exemple aboutir à refuser l'affichage d'un composant de contrôle d'entrée de type clavier virtuel en présence d'un composant de contrôle de sortie de type texte contenant par exemple le terme « pin ».

Ainsi, le procédé de l'invention fournit une technique permettant de limiter les possibilités de nuisance d'une application non sécurisée.

De plus, un avantage de l'invention, selon au moins un mode de réalisation, est de préserver cependant les possibilités d'exécution d'une application non certifiée.

En effet, grâce au procédé de l'invention, une application non certifiée pourra s'exécuter sur un dispositif électronique, comme un terminal de paiement par exemple, si elle respecte l'ensemble des règles de restriction définies.

Par exemple, l'étape de restriction ou d'invalidation peut autoriser des actions sans risque comme l'utilisation de menus déroulants, ou l'affichage de fenêtre de messages, ou l'utilisation de boutons simples.

Selon les modes de réalisation de l'invention, ledit procédé de sécurisation d'interface peut comprendre une vérification d'une certification d'au moins un desdits composants de contrôle d'interface utilisés par ladite application.

Dans certains modes de réalisation de l'invention, ladite vérification d'une certification desdits composants de contrôle peut être commune à plusieurs applications.

En effet, si plusieurs applications utilisent les mêmes composants de contrôle, il suffit à l'éditeur de faire certifier l'ensemble de ces composants de contrôle une seule fois.

Par exemple, la certification d'un clavier virtuel peut comprendre la vérification de chaque touche du clavier, la sélection d'une touche « N » devant se traduire uniquement par la saisie du caractère « N », ainsi que la vérification de l'absence de zone de sélection autres que les touches affichées.

Un autre avantage de l'application est d'offrir la possibilité à un éditeur de modifier l'apparence d'un ensemble d'applications, en faisant certifier un nouveau jeu de composants de contrôle, associés par exemple à de nouvelles feuilles de style ou de nouvelles animations.

Dans certains modes particuliers de réalisation de l'invention, ladite au moins une règle de restriction d'utilisation est mémorisée au sein du dispositif électronique lors de son installation. Dans d'autres modes de réalisation, il peut s'agir de règles mises à jour lors d'une opération de maintenance locale ou à distance.

Selon les modes de mise en oeuvre de l'invention, le procédé peut comprendre une étape de téléchargement d'au moins une desdites règles de restriction d'utilisation, depuis un site distant.

Dans certains modes de mise en oeuvre de l'invention, le dispositif peut par exemple interroger un serveur distant préalablement à l'exécution de l'application afin d'obtenir ladite au moins une règle de restriction d'utilisation.

Dans certains modes particuliers de réalisation de l'invention, lesdits composants de contrôle d'interface appartiennent au groupe comprenant :
- des boutons ;
- des fenêtres ;
- des textes ;
- des images ;
- des onglets ;
- des zones de saisie ;
- des claviers virtuels ;
- des menus ;
- des cadres ;
- des tableaux ;
- des zones de captures tactiles ;
- des listes de choix ;
- des cases à cocher ;
- des barres de progressions ;
- des curseurs coulissants ;
- des arbres déroulants ;
- des ascenseurs ;
- des saisisseurs de dates et/ou d'heures (« datepicker » et/ou « timepicker » en terminologie anglo-saxonne);
- des haut-parleurs ;
- des claviers matériels ;
- des souris ;
- des caméras ;
- des crayons optiques ;
- des lecteurs d'informations biométriques ;
- des combinaisons de ces contrôles élémentaires.

Dans un mode préférentiel de mise en oeuvre de l'invention, le procédé de sécurisation d'interface est adapté à une mise en oeuvre dans un environnement Internet.

Dans un mode particulièrement avantageux de réalisation de l'invention, le procédé peut être adapté à une utilisation dans un environnement respectant les recommandations du W3C (Word Wild Web Consortium).

En particulier, dans certains modes de réalisation de l'invention, ladite application non certifiée présente une interface utilisateur écrite dans un langage compatible avec le standard XML (eXtensible Markup Language).

Dans certains modes de réalisation de l'invention, la description de ladite vue et de ses composants de contrôle d'interface peut être réalisée, par exemple avec XML, de façon à définir une représentation en mémoire à l'aide d'une structure arborescente des composants de contrôle. Ainsi, il est ensuite possible d'y appliquer un algorithme automatique.

Dans un mode de réalisation avantageux de l'invention, ladite vue et/ou ses composants de contrôle d'interface sont représentés dans une mémoire à l'aide de la technologie Document Object ModeL

Dans d'autres modes de réalisation de l'invention où l'interface utilisateur de l'application est constituée d'un ensemble fini de vues fixes, non modifiables dynamiquement par l'application, ladite description peut être implémentée de façon à réagir aux actions réalisées sur les composants de contrôle. Ladite description peut alors par exemple, être implémentée suivant une technologie SAX (Simple API for XML).

Enfin, dans certains modes de mise en oeuvre de l'invention, lesdites règles de restriction peuvent être décrites avec un langage basé sur XML.

L'invention concerne de plus un produit programme d'ordinateur téléchargeable depuis un réseau de communication et/ou enregistré sur un support lisible par ordinateur et/ou exécutable par un processeur, caractérisé en ce qu'il comprend des instructions de code de programme pour la mise en oeuvre dudit procédé de sécurisation d'interface.

En particulier, ladite analyse et/ou ladite étape de restriction ou d'invalidation peut être implémentée dans un langage permettant l'analyse d'un fichier de règles compatibles avec le standard XML, comme les langages C, C++ ou Java par exemple.

L'invention concerne aussi un terminal mettant en oeuvre le procédé décrit ci-dessus et comportant des moyens d'interface entre un utilisateur et une application non certifiée s'exécutant sur ledit terminal et délivrant au moins une vue à rendre sur un écran, une vue comprenant ou étant associée à au moins un composant de contrôle d'interface.

Un tel terminal met en oeuvre, pendant l'exécution de ladite application :
- des moyens d'analyse de composants de contrôle d'interface de ladite vue, de façon à détecter au moins un composant de contrôle d'interface susceptible de poser un problème de sécurité en incitant ledit utilisateur à fournir une information sensible, dit composant suspect ;
- si au moins un composant suspect est détecté, des moyens de restriction ou d'invalidation des fonctionnalités d'au moins un composant de contrôle d'entrée dudit dispositif électronique, distinct dudit au moins un composant suspect et susceptible de permettre la fourniture de ladite information par ledit utilisateur à ladite application non certifiée ;
- des moyens de génération du rendu de ladite vue et de la restitution de ladite vue.

Dans un mode préférentiel de réalisation de l'invention, ledit terminal est muni d'une interface homme machine graphique (GUI - « Graphical User Interface » en anglais).

Selon un mode préférentiel de réalisation de l'invention, le terminal comprend des moyens de gestion de paiement électronique coopérant avec ledit écran.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels:
- la figure 1 présente un synoptique fonctionnel de l'invention dans un mode de réalisation ;
- la figure 2 illustre le fonctionnement dynamique de l'invention, basé sur le synoptique statique de la figure 1.
- la figure 3 illustre des actions possibles sur le rendu des vues de l'application lors du fonctionnement dynamique de l'invention, tel qu'illustré en figure 2.

### 6. Description d'un mode de réalisation de l'invention

### 6.1 Principe général

Le principe général de l'invention consiste donc à limiter de façon dynamique les risques de nuisances d'une application non certifiée s'exécutant sur un dispositif électronique par l'application dynamique de règles de sécurité prédéfinies sur les composants de contrôle d'interface de l'application.

Par exemple, l'invention permet d'autoriser l'exécution d'une application non certifiée, comme une animation vidéo, sur un dispositif électronique tel qu'un terminal de paiement. L'approche de l'invention est de ne pas laisser à une telle application, autant que faire se peut, la possibilité de mettre en oeuvre des actions malveillantes en analysant dynamiquement ses composants de contrôle d'entrée et/ou de sortie, au moment de la génération d'une vue à restituer, ou à rendre, notamment sur un écran.

Un exemple simple consiste à interdire à une application vidéo l'utilisation de tout composant d'interface de contrôle d'entrée pendant le déroulement de la séquence vidéo. Un autre exemple consiste à autoriser uniquement des composants d'interface de contrôle d'entrée certifiés, liés au déroulement de la séquence vidéo, comme des boutons « play », « pause », « stop ». Cette seconde approche permet d'autoriser certaines fonctionnalités de l'application tout en protégeant l'utilisateur.

Ainsi, il ne sera pas possible de répondre à une invitation malveillante dans la vidéo à fournir une donnée, et par exemple à saisir un code secret via un clavier, du fait que ce clavier aura été invalidé. De même, si l'application non certifiée présente un clavier virtuel de saisie (ce qui suppose la présence, dans l'application, d'un composant de contrôle de saisie sur le clavier virtuel), l'invention prévoira l'invalidation d'un pointeur, par exemple une souris, au moins au voisinage de ce clavier virtuel, et/ou l'invalidation de la fonction de validation ou d'utilisation d'un clavier. Cependant, la diffusion de la vue ne sera pas interrompue.

L'invention propose donc une approche originale, selon laquelle ce n'est pas l'application non certifiée qui est invalidée, mais l'utilisation de certains composants d'entrée. En d'autres termes, on conditionne l'utilisation des composants d'entrée à la présence et/ou aux caractéristiques d'autres composants d'interface non certifiés, sans agir directement sur ces derniers.

### 6.2 Description d'un mode particulier de réalisation

On considère par la suite un exemple de mise en oeuvre de l'invention pour un terminal de paiement.

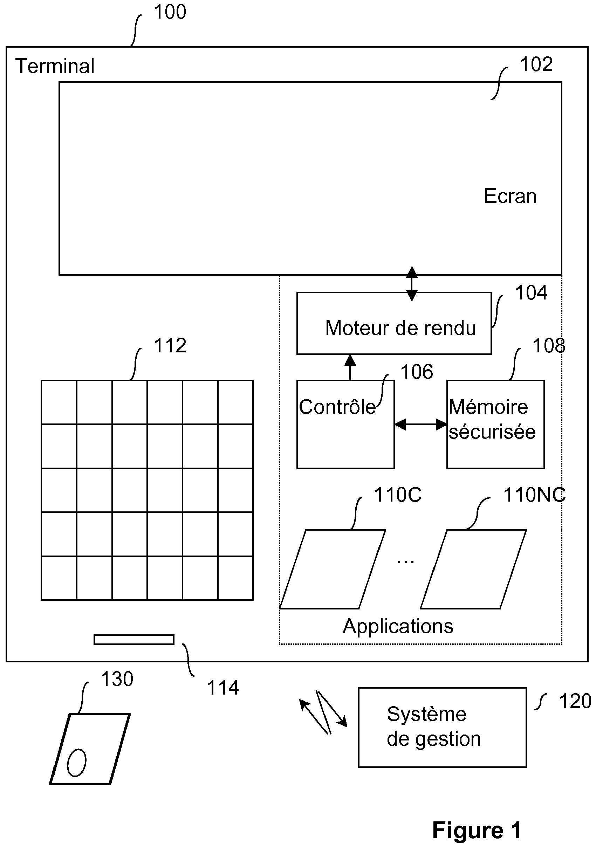

On présente, en relation avec la figure 1, un mode particulier de mise en oeuvre du procédé selon l'invention, dans lequel ledit procédé est utilisé dans un environnement technologique de type Internet.

Dans ce mode particulier de réalisation de l'invention, un terminal de paiement 100 permet à un utilisateur d'effectuer des règlements et transmet des informations relatives à ces règlements vers un système de gestion distant 120.

Dans le mode particulier décrit ici, l'utilisateur utilise pour la fourniture de ses données personnelles une carte électronique de paiement 130 ou une carte de fidélité. Cependant, d'autres modes de réalisation du procédé peuvent utiliser d'autres moyens de fourniture des données personnelles de l'utilisateur. Il peut s'agir par exemple de la fourniture d'un code d'accès à un site Internet spécifique contenant des données personnelles ou d'un code d'accès permettant d'identifier une opération réalisée antérieurement par l'opérateur, comme par exemple l'achat d'un titre de transport. Il peut également s'agir d'une information biométrique, relevée par un capteur prévu à cet effet.

Le terminal 100 comporte des moyens d'interface avec l'utilisateur. En particulier, dans le mode de réalisation particulier décrit par la figure 1, le terminal est muni d'un écran tactile 102. Il s'agit par exemple d'un écran couleur adapté au visionnage de séquences vidéo.

Dans l'exemple illustré par la figure 1, le terminal est également muni d'un clavier matériel 112 ainsi que d'un lecteur 114 apte à lire les informations contenues sur la carte électronique 130.

Le terminal comporte des moyens d'exécution d'au moins deux applications, par exemple au moins une application certifiée 110C et au moins une application non certifiée 110NC.

Après vérification de leur certification, les applications 110C peuvent être exécutées classiquement. En revanche, une application non certifiée 110NC, par exemple un jeu ou une application à visée publicitaire, comme une séquence vidéo, s'exécutant sur le terminal lorsque celui-ci n'est pas utilisé par exemple pour un paiement, doit être contrôlée.

Dans l'exemple présenté, l'interface utilisateur de l'application 110NC est contenue dans des fichiers de description d'interface écrits dans un langage compatible avec le standard XML, comme un langage HTML ou XUL (« XML-based User interface Language »).

Le terminal 100 comporte un module de contrôle 106, apte à extraire des règles contenues dans une mémoire sécurisée 108 et à vérifier leur respect par les vues de l'application 110NC.

Enfin, un moteur de rendu 104, classique, est apte à assurer la restitution de la vue sur l'écran 102 en conséquence.

Selon un mode de mise en oeuvre de l'invention, le module de contrôle peut comprendre au moins un analyseur (« parser »), par exemple un analyseur XML, implémenté dans un langage compatible avec XML, comme C, C++ ou Java. Ledit analyseur peut être apte à générer un arbre DOM (« Document Object Model ») pour décrire la structure des différentes vues de l'application et/ou à en contrôler dynamiquement la validité, selon les règles de sécurité définies. Dans l'exemple illustré, l'arbre DOM est généré à partir des fichiers XML de description d'interface lors du lancement de l'application puis regénéré et/ou modifié pendant l'exécution de l'application.

Le moteur de contrôle est également apte à modifier l'arbre DOM en fonction des règles de restriction. Cet arbre DOM pourra ensuite être utilisé par le moteur de rendu pour l'affichage d'une vue.

D'autres modes de réalisation peuvent être basés sur une technologie SAX.

Dans certains modes avantageux de réalisation, l'invention peut être implémentée dans un navigateur web, comme un navigateur « WebC » par exemple, tel que les modifications dynamiques du DOM permises par un langage comme par exemple le langage javascript puissent être systématiquement confrontées aux règles de sécurité définies.

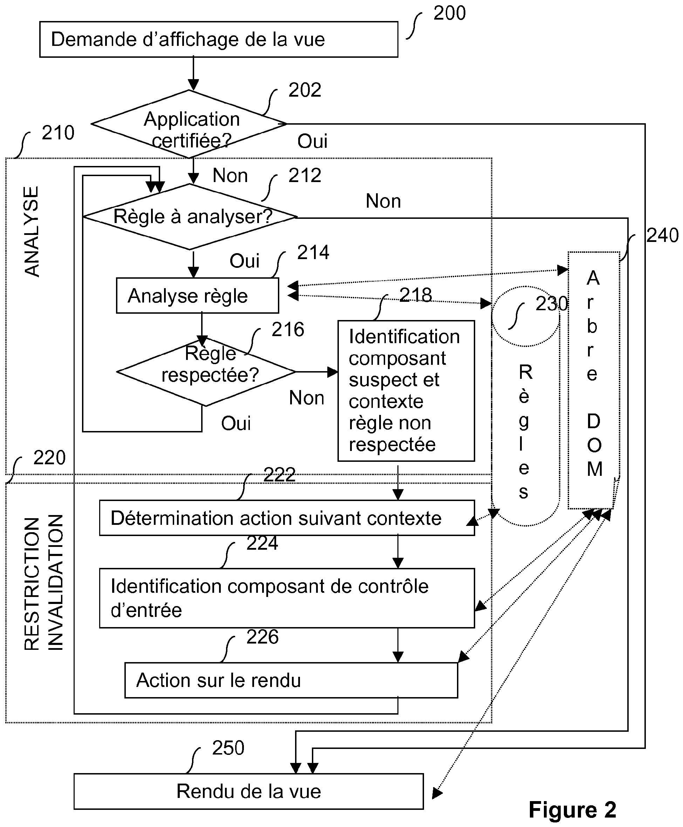

La figure 2 illustre le fonctionnement dynamique de l'invention.

Dans le mode de réalisation décrit ici, le procédé selon l'invention est mis en oeuvre pendant l'exécution de l'application, lorsque celle-ci demande l'affichage de l'une de ses vues 200. Une vérification 202 de la certification de l'application est tout d'abord effectuée. Si l'application est certifiée, aucun contrôle n'est réalisé sur la vue de l'application avant son rendu.

Dans le cas où l'application n'est pas certifiée, le procédé prévoit une étape d'analyse 210, portant sur les composants de contrôle de ladite vue.

Selon un mode particulier de réalisation de l'invention, cette analyse se base sur le respect de règles de restriction d'utilisation 230 stockées par exemple dans une zone de mémoire 108 du terminal.

Ces règles peuvent par exemple être décrites dans un langage compatible avec le standard XML.

Dans le mode de réalisation présenté en figure 2, le procédé prévoit pour chaque règle à examiner 212 une analyse 214 du respect de ladite règle par l'arbre DOM 240 correspondant à ladite vue.

Dans certaines mises en oeuvre de l'invention, lesdites règles peuvent inclure une exigence de certification des composants de contrôle d'interface présents dans l'arbre DOM.

L'étape d'analyse 210 peut alors inclure par exemple une vérification de la certification pour chaque composant de contrôle d'interface présent dans l'arbre DOM.

Dans d'autres modes de réalisation, le procédé peut comporter, dès le lancement de l'application, et/ou à des instants prédéterminés, une étape de vérification de la certification de l'application et/ou de certains ensembles de composants de contrôle de l'application, par exemple de bibliothèques graphiques de composants de contrôle.

Un avantage de l'invention, au moins dans certains modes particuliers de réalisation, est donc de permettre de limiter la nécessité de certification d'une application pour son exécution sur un terminal, à la certification de ses composants de contrôle d'interface, dans la mesure où ladite application respecte les règles de restriction définies.

Si une règle n'est pas respectée (test 216), l'étape d'analyse conclut à l'identification 218 d'au moins un composant suspect. Le contexte de ladite règle non respectée peut également être sauvegardé pour une utilisation dans l'étape suivante 220 de restriction/ invalidation.

Dans d'autres modes de réalisation de l'invention, l'identification 218 d'au moins un composant suspect peut également comporter l'association d'un niveau de risque à ce composant suspect. Ce niveau de risque peut par exemple être fonction de la certification ou de la nature dudit composant suspect.

Selon l'invention, le procédé prévoit ensuite une étape 220 de restriction ou l'invalidation d'un composant d'entrée, distinct du composant suspect identifié.

Cette étape 220 comprend une sous-étape 222 de détermination de l'action de restriction ou d'invalidation à entreprendre en fonction du composant suspect et de la règle non respectée. Cette sous-étape 222 de détermination peut également se baser sur des règles de restriction supplémentaires à celles utilisées dans l'étape 210 d'analyse.

Par exemple, une règle supplémentaire peut être d'interrompre l'exécution de l'application dès la détection d'un composant suspect.

Si l'action à entreprendre n'est pas d'interrompre l'application, le procédé prévoit ensuite, une sous-étape 224 d'identification d'au moins un composant de contrôle d'entrée, distinct du composant suspect identifié, sur lequel doit porter l'action de restriction/ou l'invalidation. Cette identification peut par exemple être réalisée en relation avec l'arbre DOM 240 décrivant la vue.

Enfin, le procédé prévoit la mise en oeuvre d'une action 226 sur le rendu de la vue avant l'étape de génération et de restitution 250 du rendu de la vue.

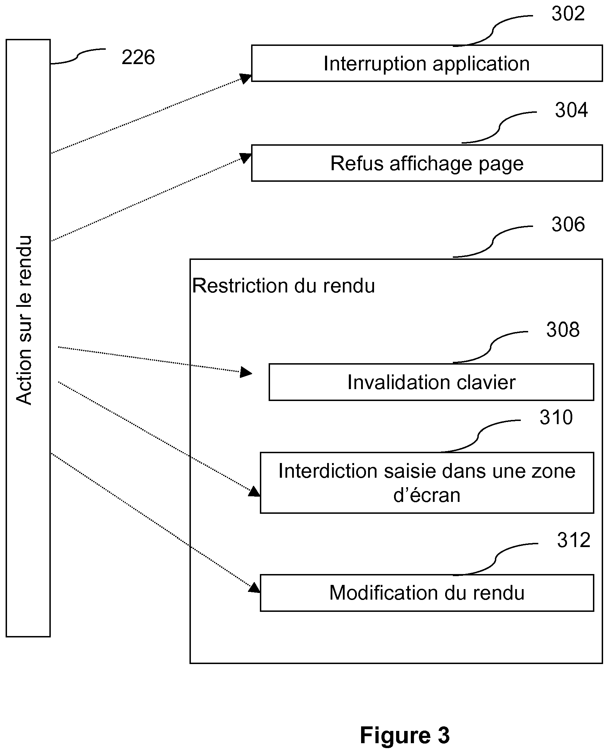

Cette action sur le rendu peut varier selon les modes de réalisation de l'invention, comme illustré dans l'exemple de la figure 3.

Une action peut par exemple consister à interrompre l'exécution de l'application 302 ou à refuser l'affichage de la vue 304.

Selon les modes de réalisation de l'invention, des restrictions peuvent être apportées au rendu de ladite vue. Par exemple, il peut s'agir d'une invalidation 308 d'un clavier matériel ou virtuel, d'une interdiction 310 de toute saisie dans au moins une zone particulière de l'écran ou d'une modification 312 du rendu de ladite vue de l'application et notamment des composants d'entrée identifiés dans l'étape 224.

Ainsi, certains modes de réalisation prévoient qu'au moins un composant de contrôle d'entrée, et éventuellement lesdits composants suspects, puissent ne pas être affichés.

Dans le mode de réalisation particulier décrit ici, une règle de restriction simple peut consister à inhiber toutes les actions possibles d'un utilisateur sur l'écran 102 pendant le déroulement d'une séquence vidéo.

Une action sur le rendu peut alors consister à supprimer l'affichage de l'ensemble des composants de contrôle d'entrée prévus dans la vue.

Une autre règle peut par exemple permettre uniquement l'utilisation de composants de contrôle d'interface certifiés liés à la lecture de ladite séquence vidéo, comme des boutons « lecture », « pause », « stop » par exemple.

Dans ce cas, une action sur le rendu peut consister par exemple à supprimer l'affichage des composants de contrôle d'entrée différents desdits boutons. Un autre action peut être de conserver leur affichage mais de les rendre inactifs.

Dans un mode particulier de réalisation de l'invention, un message expliquant la détection d'un risque peut également être affiché.

Dans certaines modes particuliers de réalisation, par exemple quand l'étape d'analyse 210 a associé des niveaux de risque auxdits composants suspects, l'étape 220 de restriction ou d'invalidation d'un composant d'entrée peut varier suivant le niveau de risque du composant suspect détecté.

Par exemple, l'étape 220 de restriction ou d'invalidation peut aboutir, en cas de risque mineur, à refuser l'affichage d'un composant de contrôle d'entrée, l'application continuant à l'exécuter, tandis qu'en cas détection d'un risque majeur, cette étape peut entraîner l'interruption de l'application.

Dans une variante de la mise en oeuvre de l'invention, le procédé comprend une étape préalable de détermination des règles de restriction 230. Cette étape peut par exemple comprendre la détermination des règles de restriction applicables par accès à un site distant du constructeur lors du lancement de l'application.

Dans une variante de l'invention, le procédé peut être appliqué à une application certifiée, afin de renforcer la sécurité des transactions effectuées par le terminal de paiement.

## Revendications

1. Procédé de sécurisation d'interface entre un utilisateur et une application non certifiée s'exécutant sur un dispositif électronique et délivrant au moins une vue à rendre sur un écran, une vue comprenant ou étant associée à au moins un composant de contrôle d'interface,
**caractérisé en ce qu'**il met en oeuvre, pendant l'exécution de ladite application, les étapes suivantes :
- analyse de composants de contrôle d'interface de ladite vue, de façon à détecter au moins un composant de contrôle d'interface susceptible de poser un problème de sécurité en incitant ledit utilisateur à fournir une information confidentielle, dit composant suspect, ladite étape d'analyse tenant compte d'un ensemble de règles de restriction d'utilisation prédéterminées d'au moins un desdits composants de contrôle d'interface et/ou d'au moins une combinaison d'au moins deux desdits composants de contrôle d'interface ;
- si au moins un composant suspect est détecté, restriction ou invalidation des fonctionnalités d'au moins un composant de contrôle d'entrée dudit dispositif électronique, distinct dudit au moins un composant suspect et susceptible de permettre la fourniture de ladite information par ledit utilisateur à ladite application non certifiée, ladite étape de restriction ou d'invalidation adaptant ladite restriction ou invalidation en fonction de la ou desdites règles non respectées, ladite étape de restriction ou d'invalidation comprenant une sous-étape d'interdiction de l'introduction d'information par l'intermédiaire d'un clavier réel ou virtuel ;
- génération du rendu de ladite vue et restitution de ladite vue.

2. Procédé de sécurisation d'interface selon la revendication 1, **caractérisé en ce que** ladite étape de restriction ou d'invalidation comprend une sous-étape d'interdiction de la saisie d'information dans au moins une zone d'un écran de visualisation, ladite zone étant identifiée en fonction d'une zone d'affichage associée à au moins un composant suspect.

3. Procédé de sécurisation d'interface selon l'une quelconque des revendications 1 à 2, **caractérisé en ce que** ladite étape de restriction ou d'invalidation comprend une sous-étape de modification dynamique du rendu d'au moins un desdits composants de contrôle d'interface de ladite vue.

4. Procédé de sécurisation d'interface selon l'une quelconque des revendications 1 à 3, **caractérisé en ce qu'**il comprend une vérification d'une certification d'au moins un desdits composants de contrôle d'interface utilisés par ladite application.

5. Procédé de sécurisation d'interface selon l'une quelconque des revendications 1 à 4, **caractérisé en ce qu'**il comprend une étape de téléchargement d'au moins une desdites règles de restriction d'utilisation, depuis un site distant.

6. Procédé de sécurisation d'interface selon l'une quelconque des revendications 1 à 5, **caractérisé en ce que** lesdits composants de contrôle d'interface appartiennent au groupe comprenant :
- des boutons ;
- des fenêtres ;
- des textes ;
- des images ;
- des onglets ;
- des zones de saisie ;
- des claviers virtuels ;
- des menus ;
- des cadres ;
- des tableaux ;
- des zones de captures tactiles ;
- des listes de choix ;
- des cases à cocher ;
- des barres de progressions ;
- des curseurs coulissants ;
- des arbres déroulants ;
- des ascenseurs ;
- des saisisseurs de dates et/ou d'heures ;
- des haut-parleurs ;
- des claviers matériels ;
- des souris ;
- des caméras ;
- des crayons optiques ;
- des lecteurs d'informations biométriques ;
- des combinaisons de ces contrôles élémentaires.

7. Procédé de sécurisation d'interface selon l'une quelconque des revendications 1 à 6, **caractérisé en ce qu'**il est adapté à une mise en oeuvre dans un environnement Internet.

8. Procédé de sécurisation d'interface selon l'une quelconque des revendications 1 à 7, **caractérisé en ce que** ladite application non certifiée présente une interface utilisateur écrite dans un langage compatible avec le standard XML.

9. Procédé de sécurisation d'interface selon l'une quelconque des revendications 1 à 8, **caractérisé en ce que** ladite vue et/ou ses composants de contrôle d'interface sont représentés dans une mémoire à l'aide de la technologie Document Object Model.

10. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de sécurisation d'interface selon l'une au moins des revendications 1 à 9.

11. Terminal mettant en oeuvre le procédé de sécurisation d'interface selon l'une au moins des revendications 1 à 9, et comportant des moyens d'interface entre un utilisateur et une application non certifiée s'exécutant sur ledit terminal et délivrant au moins une vue à rendre sur un écran, une vue comprenant ou étant associée à au moins un composant de contrôle d'interface,
**caractérisé en ce qu'**il met en oeuvre, pendant l'exécution de ladite application :
- des moyens d'analyse de composants de contrôle d'interface de ladite vue, de façon à détecter au moins un composant de contrôle d'interface susceptible de poser un problème de sécurité en incitant ledit utilisateur à fournir une information confidentielle, dit composant suspect, lesdits moyens d'analyse tenant compte d'un ensemble de règles de restriction d'utilisation prédéterminées d'au moins un desdits composants de contrôle d'interface et/ou d'au moins une combinaison d'au moins deux desdits composants de contrôle d'interface ;
- si au moins un composant suspect est détecté, des moyens de restriction ou d'invalidation des fonctionnalités d'au moins un composant de contrôle d'entrée dudit dispositif électronique, distinct dudit au moins un composant suspect et susceptible de permettre la fourniture de ladite information par ledit utilisateur à ladite application non certifiée, lesdits moyens de restriction ou d'invalidation adaptant ladite restriction ou invalidation en fonction de la ou desdites règles non respectées, lesdits moyens de restriction ou d'invalidation comprenant des moyens d'interdiction de l'introduction d'information par l'intermédiaire d'un clavier réel ou virtuel ;
- des moyens de génération du rendu de ladite vue et de la restitution de ladite vue.

12. Terminal selon la revendication 11, **caractérisé en ce qu'**il comprend des moyens de gestion de paiement électronique coopérant avec ledit écran.

## Patentansprüche

1. Verfahren zur Schnittstellensicherung zwischen einem Benutzer und einer nicht zertifizierten Anwendung, die an einer elektronischen Vorrichtung ausgeführt wird und mindestens eine auf einem Bildschirm wiederzugebende Ansicht liefert, wobei eine Ansicht mindestens eine Schnittstellenkontrollkomponente umfasst oder dieser zugeordnet ist,
**dadurch gekennzeichnet, dass** es während der Ausführung der Anwendung die folgenden Schritte einsetzt:
- Analyse von Schnittstellenkontrollkomponenten der Ansicht, um mindestens eine Schnittstellenkontrollkomponente zu erfassen, die geeignet ist, ein Sicherheitsproblem zu stellen, wobei der Benutzer dazu veranlasst wird, eine vertrauliche Information, suspekte Komponente genannt, zu liefern, wobei der Analyseschritt eine Gesamtheit von vorbestimmten Verwendungsrestriktionsvorschriften mindestens einer der Schnittstellenkontrollkomponenten und/oder mindestens einer Kombination mindestens zweier Schnittstellenkontrollkomponenten berücksichtigt;
- wenn mindestens eine suspekte Komponente erfasst wird, Restriktion oder Ungültigkeitserklärung der Funktionalitäten mindestens einer Eingangskontrollkomponente der elektronischen Vorrichtung, die sich von der mindestens einen suspekten Komponente unterscheidet und geeignet ist, die Bereitstellung einer Information durch den Benutzer für die nicht zertifizierte Anwendung zu ermöglichen, wobei der Schritt der Restriktion oder Ungültigkeitserklärung die Restriktion oder Ungültigkeitserklärung in Abhängigkeit von der oder den nicht eingehaltenen Vorschriften anpasst, wobei der Schritt der Restriktion oder Ungültigkeitserklärung einen Unterschritt des Verbots der Einführung einer Information mit Hilfe einer realen oder virtuellen Tastatur umfasst;
- Erzeugung der Wiedergabe der Ansicht und Restitution der Ansicht.

2. Verfahren zur Schnittstellensicherung nach Anspruch 1, **dadurch gekennzeichnet, dass** der Schritt der Restriktion oder Ungültigkeitserklärung einen Unterschritt des Verbots der Informationserfassung in mindestens einer Zone eines Anzeigebildschirms umfasst, wobei die Zone in Abhängigkeit von einer Anzeigezone, die mindestens einer suspekten Komponente zugeordnet ist, identifiziert wird.

3. Verfahren zur Schnittstellensicherung nach einem der Ansprüche 1 bis 2, **dadurch gekennzeichnet, dass** der Schritt der Restriktion oder Ungültigkeitserklärung einen Unterschritt der dynamischen Modifikation der Wiedergabe mindestens einer der Schnittstellenkontrollkomponenten der Ansicht umfasst.

4. Verfahren zur Schnittstellensicherung nach einem der Ansprüche 1 bis 3, **dadurch gekennzeichnet, dass** es eine Überprüfung einer Zertifizierung mindestens einer der Schnittstellenkontrollkomponenten, die von der Anwendung verwendet werden, umfasst.

5. Verfahren zur Schnittstellensicherung nach einem der Ansprüche 1 bis 4, **dadurch gekennzeichnet, dass** es einen Schritt des Fernladens mindestens einer der Verwendungsrestriktionsvorschriften von einem entfernten Standort umfasst.

6. Verfahren zur Schnittstellensicherung nach einem der Ansprüche 1 bis 5, **dadurch gekennzeichnet, dass** die Schnittstellenkontrollkomponenten der folgenden Gruppe angehören, umfassend:
- Knöpfe;
- Fenster;
- Texte;
- Bilder;
- Tabs;
- Eingabezonen;
- virtuelle Tastaturen;
- Menüs;
- Rahmen;
- Tabellen;
- Touch-Aufnahmezonen;
- Auswahllisten;
- anzukreuzende Felder;
- Fortschrittsleisten;
- Gleitschieber;
- Drop-Down-Wellen;
- Liftmittel;
- Daten- und/oder Zeiteingabemittel;
- Lautsprecher;
- materielle Tastaturen;
- Mäuse;
- Kameras;
- optische Stifte;
- biometrische Informationsleser;
- Kombinationen dieser elementaren Kontrollen.

7. Verfahren zur Schnittstellensicherung nach einem der Ansprüche 1 bis 6, **dadurch gekennzeichnet, dass** es an einen Einsatz in einer Internet-Umgebung angepasst ist.

8. Verfahren zur Schnittstellensicherung nach einem der Ansprüche 1 bis 7, **dadurch gekennzeichnet, dass** die nicht zertifizierte Anwendung eine Benutzerschnittstelle aufweist, die in einer mit dem XML-Standard kompatiblen Sprache geschrieben ist.

9. Verfahren zur Schnittstellensicherung nach einem der Ansprüche 1 bis 8, **dadurch gekennzeichnet, dass** die Ansicht und/oder ihre Schnittstellenkontrollkomponenten in einem Speicher mit Hilfe der Technologie Document Object Model dargestellt sind.

10. Computerprogrammprodukt, das von einem Kommunikationsnetz fernladbar und/oder auf einem von einem Computer lesbaren Träger gespeichert und/oder von einem Prozessor ausführbar ist, **dadurch gekennzeichnet, dass** es Programmcodebefehle für den Einsatz des Schnittstellensicherungsverfahrens nach mindestens einem der Ansprüche 1 bis 9 umfasst.

11. Endgerät, das das Verfahren zur Schnittstellensicherung nach mindestens einem der Ansprüche 1 bis 9 einsetzt, und umfassend Schnittstellenmittel zwischen einem Benutzer und einer nicht zertifizierten Anwendung, die an dem Endgerät ausgeführt wird und mindestens eine auf einem Bildschirm wiederzugebende Ansicht liefert, wobei eine Ansicht mindestens eine Schnittstellenkontrollkomponente umfasst oder dieser zugeordnet ist,
**dadurch gekennzeichnet, dass** es während der Ausführung der Anwendung einsetzt:
- Mittel zur Analyse von Schnittstellenkontrollkomponenten der Ansicht, um mindestens eine Schnittstellenkontrollkomponente zu erfassen, die geeignet ist, ein Sicherheitsproblem zu stellen, wobei der Benutzer dazu veranlasst wird, eine vertrauliche Information, suspekte Komponente genannt, zu liefern, wobei der Analyseschritt eine Gesamtheit von vorbestimmten Verwendungsrestriktionsvorschriften mindestens einer der Schnittstellenkontrollkomponenten und/oder mindestens einer Kombination mindestens zweier Schnittstellenkontrollkomponenten berücksichtigt;
- wenn mindestens eine suspekte Komponente erfasst wird, Mittel zur Restriktion oder Ungültigkeitserklärung der Funktionalitäten mindestens einer Eingangskontrollkomponente der elektronischen Vorrichtung, die sich von der mindestens einen suspekten Komponente unterscheidet und geeignet ist, die Bereitstellung einer Information durch den Benutzer für die nicht zertifizierte Anwendung zu ermöglichen, wobei die Mittel zur Restriktion oder Ungültigkeitserklärung die Restriktion oder Ungültigkeitserklärung in Abhängigkeit von der oder den nicht eingehaltenen Vorschriften anpassen, wobei die Mittel zur Restriktion oder Ungültigkeitserklärung Mittel zum Verbot der Einführung einer Information mit Hilfe einer realen oder virtuellen Tastatur umfassen;
- Mittel zur Erzeugung der Wiedergabe der Ansicht und Restitution der Ansicht.

12. Endgerät nach Anspruch 11, **dadurch gekennzeichnet, dass** es Mittel zur elektronischen Zahlungssteuerung umfasst, die mit dem Bildschirm zusammenwirken.

## Claims

1. Interface securing method between a user and a non certified application running on an electronic device and providing at least one view to be rendered on a screen, and a view comprising or associated to at least one interface control component,
**characterised in that** it implements, when said application is running, the following steps:
- analysis of the interface control components of said view, so as to detect at least one interface control component that may pose a security problem by inciting said user to provide sensitive information, called a suspicious component, said analysis step taking into account a predetermined set of rules to restrict the use of at least one of said interface control components and/or at least one combination of at least two of said interface control components;
- if at least one suspicious component is detected, restriction or invalidation of the functions of at least one input control component of said electronic device, distinct from said at least one suspicious component and able to allow said information to be provided by said user to said non certified application, said restriction or invalidation step adapting said restriction or invalidation in function of said rule(s) that are not respected, and said restriction or invalidation step comprising a sub-step to prohibit the entry of information via a hard or virtual keyboard;
- generation of the rendering of said view and reproduction of said view.

2. Interface securing method according to claim 1, **characterised in that** said restriction or invalidation step comprises a sub-step to prohibit the entry of information in at least one zone of a viewing screen, wherein said zone is identified in function of a display zone associated to at least one suspicious component.

3. Interface securing method according to any of claims 1 to 2, **characterised in that** said restriction or invalidation step comprises a sub-step to modify dynamically the rendering of at least one of said interface control components of said view.

4. Interface securing method according to any of claims 1 to 3, **characterised in that** it comprises a verification of the certification of at least one of said interface control components used by said application.

5. Interface securing method according to any of claims 1 to 4, **characterised in that** it comprises a step of downloading at least one of said rules for the restriction of use, from a remote site.

6. Interface securing method according to the any of claims 1 to 4, **characterised in that** said interface control components belong to the group comprising:
- buttons;
- windows;
- texts;
- images;
- tabs;
- entry zones;
- virtual keyboards ;
- menus;
- frames;
- tables;
- touch-sensitive capture zones;
- lists of choices;
- boxes to be ticked;
- progress bars;
- sliding cursors;
- drop-down tree structures;
- elevators;
- datepickers and/or timepickers;
- loud speakers;
- hard keyboards;
- mice;
- cameras;
- bar code wands;
- biometric information scanners;
- combinations of these elementary controls.

7. Interface securing method according to any of claims 1 to 6, **characterised in that** it is adapted to an implementation in an Internet environment.

8. Interface securing method according to any of claims 1 to 10, **characterised in that** said non certified application has a user interface written in a language that is compatible with the XML standard.

9. Interface securing method according to any of claims 1 to 11, **characterised in that** said view and/or its interface control components are represented in a memory with the aid of the Document Object Model technology.

10. Computer program product that may be downloaded from a communication network and/or saved onto a support which may be read by computer and/or executed by a processor, **characterised in that** it comprises program code instructions to implement said interface securing method according to at least one of claims 1 to 9.

11. Terminal implementing the interface securing method according to at least one of claims 1 to 9, and including interface means between a user and a non certified application running on said terminal and providing at least one view to be rendered on a screen, and a view comprising or associated to at least one interface control component,
**characterised in that** it implements, when said application is running:
- means of analysing the interface control components of said view, so as to detect at least one interface control component that could pose a security problem by inciting said user to provide sensitive information, called a suspicious component, said means of analysing taking into account a predetermined set of rules to restrict the use of at least one of said interface control components and/or at least one combination of at least two of said interface control components;
- if at least one suspicious component is detected, means of restriction or invalidation of the functions of at least one input control component of said electronic device, distinct from said at least one suspicious component and able to allow said information to be provided by said user to said non certified application, said means of restriction or invalidation adapting said restriction or invalidation in function of said rule(s) that are not respected, and said means of restriction or invalidation step comprising means of prohibiting the entry of information via a hard or virtual keyboard;
- means of generating the rendering of said view and reproduction of said view.

12. Terminal according to claim 11, **characterised in that** it comprises electronic payment management means which cooperate with said screen.
